# EUROPÄISCHE PATENTSCHRIFT

(11) **EP 2 127 479 B1**
(45) Veröffentlichungstag und Bekanntmachung des Hinweises auf die Patenterteilung: **21.10.2020**
(21) Anmeldenummer: 08701172.2
(22) Anmeldetag: 22.01.2008
(51) Int. Cl.: H05B 6/12

(54) **VORRICHTUNG ZUR WANDLUNG INDUKTIV ÜBERTRAGENER ELEKTRISCHER ENERGIE UND VERFAHREN ZUR HERSTELLUNG EINER DERARTIGEN VORRICHTUNG**
DEVICE FOR CONVERTING INDUCTIVELY TRANSMITTED ELECTRIC POWER, AND METHOD FOR THE PRODUCTION OF SUCH A DEVICE
DISPOSITIF POUR CONVERTIR DE L'ÉNERGIE ÉLECTRIQUE TRANSMISE PAR INDUCTION ET PROCÉDÉ DE PRODUCTION D'UN TEL DISPOSITIF

(30) Priorität: 23.01.2007 DE 102007004275
(43) Veröffentlichungstag der Anmeldung: 02.12.2009
(73) Patentinhaber: MGS Modular Galley Systems GmbH, 70178 Stuttgart (DE)
(72) Erfinder: HAAS, Karl-Heinz, 88480 Achtstetten (DE); JANS, Roland, 89073 Ulm (DE); NERGIZ, Turgay, 89077 Ulm (DE)
(74) Vertreter: Schicker, Silvia
(86) Internationale Anmeldenummer: PCT/EP2008/000458
(87) Internationale Veröffentlichungsnummer: WO 2008/089952

(56) Entgegenhaltungen:
- EP-A- 0 203 883
- EP-A- 0 830 051
- DE-A1- 10 150 949
- DE-A1- 19 818 831
- DE-U1- 29 612 514
- FR-A- 2 231 177
- FR-A- 2 582 896
- US-A- 3 761 668

## Beschreibung

Die Erfindung betrifft einen Induktionsofen mit einer austauschbaren Verbrauchereinheit zur Wandlung induktiv übertragener elektrischer Energie sowie eine Verbrauchereinheit als Austauschmodul.

Bei derartigen Verbrauchereinheiten kann es sich insbesondere um Speisebehälter zur Verwendung in Induktionsöfen handeln. Die Funktionsweise eines Induktionsofens beruht darauf, dass derartige Speisebehälter Metallschichten zeigen, in denen mittels einer Wirbelstromerzeugung durch Induktion aufgrund des ohmschen Widerstandes der Metallschichten Wärme erzeugt wird. Bei einer derartigen Metallschicht kann es sich beispielsweise um einen metallischen Topfboden, um eine Aluminiumschale oder auch eine in einer Porzellanschale einglasierte Metallschicht handeln. Die genannten Metallschichten ermöglichen eine schnelle Erhitzung von Speisen durch eine hohe Leistungsübertragung. Allerdings besteht oftmals die Schwierigkeit, über eine größere Fläche des Speisebehälters eine gewünschte Wärmeverteilung wie beispielsweise eine homogene Erwärmung zu erreichen. Diese Problematik rührt insbesondere daher, dass es vor allem mit den oftmals zur Erzeugung des notwendigen elektromagnetischen Wechselfeldes verwendeten Flachspulenanordnungen schwierig ist, eine definierte, insbesondere homogene Wärmeverteilung zu erreichen.

Die genannte Problematik wirkt sich insbesondere dann nachteilig aus, wenn vergleichsweise trockene Güter zu erhitzen sind bzw. wenn die Geometrie des Speisebehälters keine oder nur eine geringe Rotationssymmetrie zeigt. Bei der Auslegung der beschriebenen Systeme zur induktiven Erwärmung von Speisen stellt sich somit regelmäßig ein Zielkonflikt ein, der darin besteht, einerseits die genannte leitende Schicht so zu gestalten, dass sich eine definierte, wie beispielsweise eine möglichst homogene Erwärmung der interessierenden Fläche ergibt, andererseits jedoch einen möglichst hohen Wirkungsgrad der elektromagnetischen Ankopplung des Speisebehälters an das die gewünschten Ströme erzielende Wechselfeld zu erreichen. Ähnliche Zielkonflikte ergeben sich auch bei der Realisation anderer Einschubelemente in Induktionsöfen, wo ebenfalls ein Kompromiss zwischen einer guten Ankopplung an ein äußeres elektromagnetisches Wechselfeld und einer effizienten Ausnutzung der übertragenen elektrischen Energie gefunden werden muss.

Aus der EP 0 830 051 A2 ist eine Vorrichtung zum Erwärmen von zumindest teilweise vorbereiteten Lebensmitteln bekannt. Die Vorrichtung besteht aus einem stationären Teil und einem transportierbaren Teil. Der stationäre Teil befindet sich beim Lebensmittelempfänger und ist ein induktives Regeneriergerät mit mindestens einer Primärspule. Der transportierbare Teil beinhaltet mindestens ein Induktionsgeschirr und wahlweise einen Behälter. Lebensmittel in den Geschirren werden dadurch regeneriert, dass in den Geschirren elektromagnetische Energie von den Primärspulen des stationären Teils induziert und in Joulesche Wärme umgewandelt wird.

Dokument FR 2 582 896 zeigt eine Platte mit einer zugeordneten Primärspule. Auf dieser Platte können wahlweise verschiedene Verbrauchereinheiten derart platziert werden, dass eine Sekundärspule der jeweiligen Verbrauchereinheit zur Aufnahme von elektromagnetischer Energie aus der Primärspule mit dieser zusammenwirkt.

Es ist daher Aufgabe der vorliegenden Erfindung, eine Vorrichtung anzugeben, die es ermöglicht, Speisebehälter oder andere Einschubelemente für Induktionsöfen bei einer möglichst effizienten Ankopplung an ein äußeres elektromagnetisches Wechselfeld so zu gestalten, dass gleichzeitig eine möglichst effiziente Ausnutzung der übertragenen elektrischen Energie gewährleistet ist.

Diese Aufgabe wird durch die Vorrichtungen mit den in Anspruch 1 und 6 genannten Merkmalen gelöst. Die Unteransprüche betreffen vorteilhafte Weiterbildungen und Ausführungsvarianten der Erfindung.

Die erfindungsgemäße Vorrichtung zur Wandlung induktiv übertragener elektrischer Energie nach Anspruch 1 ist eine Verbrauchereinheit.

Die erfindungsgemäße Verbrauchereinheit zur Wandlung induktiv übertragener elektrischer Energie zeigt mindestens eine Sekundärspule zur Aufnahme von Energie aus einem elektromagnetischen Wechselfeld. Die Sekundärspule ist dabei elektrisch mit mindestens einem Verbraucher verbunden, in dem die elektrische Energie umgewandelt wird. Die genannte Verbrauchereinheit ist als austauschbares Modul für das Innere eines Induktionsofens ausgebildet und weist einen Speisebehälter auf, wobei es sich bei dem mindestens einen Verbraucher um einen strukturierten elektrisch leitenden Bereich in dem Speisebehälter handelt, der geeignet ist, elektrischen Strom aufgrund seines ohmschen Widerstandes in Wärme umzuwandeln

Die Verbrauchereinheit zeigt damit nach der Lehre der Erfindung mindestens zwei Bereiche, die unterschiedlichen Anforderungen gerecht werden müssen. Der erste Bereich ist der Bereich, in dem die Sekundärspule angeordnet ist. Die Hauptanforderung an diesen Bereich und damit an die Sekundärspule besteht darin, eine möglichst effiziente Aufnahme elektrischer Energie aus dem genannten elektromagnetischen Wechselfeld zu gewährleisten. Allerdings bestehen aufgrund der erfindungsgemäßen Gestaltung der Verbrauchereinheit auch erweiterte Möglichkeiten zur Auslegung der Sekundärspule. Die Sekundärspule kann nunmehr dahingehend optimiert werden, dass sie die elektromagnetische Energie aus dem elektromagnetischen Wechselfeld besonders effizient aufnimmt; dies wird vor allem dadurch möglich, dass im Bereich der Sekundärspule keinerlei weitere Verbraucher angeordnet sein müssen, die zu Kompromissen bei der Auslegung des Bereiches Anlass geben würden. In einer Variante der Erfindung ist die Sekundärspule als Teil einer Platine, insbesondere als ring- bzw. spiralförmige Leiterbahnen ausgebildet.

Die Verbrauchereinheit kann als ersten Verbraucher eine Induktionsspule aufweisen, die mit der Sekundärspule insbesondere durch Leitungen in elektrischer Verbindung steht.

Ferner kann ein temperaturgeregelter Schalter wie beispielsweise ein Thermostat in der elektrischen Verbindung zwischen der Sekundärspule und dem Verbraucher angeordnet sein.

Ein weiterer Vorteil der oben beschriebenen erfindungsgemäßen Lösung besteht darin, dass die Energieübertragung aus dem Induktionsofen in die Verbrauchereinheit drahtlos, das heißt ohne galvanische Verbindung erfolgt. Dies eröffnet insbesondere die Möglichkeit, auf die Steuerungseinrichtung, das Kodierungssystem sowie das Bedienpanel des Induktionsofen zurückzugreifen, so dass sich speziell für Anwendungen, in denen die Verbraucher als Heizelemente ausgeführt sind, die elektrischen Einbauten in der Verbrauchereinheit einfach gestalten lassen. Hierdurch wird die Möglichkeit geschaffen, mit der kompakten Anordnungen große Leistungen zu übertragen und insbesondere Heizgeräte derart einfach auszuführen, dass sie als Lager- und Transportbehälter speziell für Anwendungen im Bereich des Caterings in Verkehrsflugzeugen verwendet werden können.

Da die Energieübertragung in einem definierten Bereich, nämlich insbesondere im Bereich der Sekundärspule erfolgt, lassen sich darüber hinaus diejenigen Bereiche der Gesamtanordnung, insbesondere der Verbrauchereinheit, die von starken elektromagnetischen Wechselfeldern betroffen sind, wirksam begrenzen. Dies führt dazu, dass gesetzliche Vorgaben hinsichtlich der elektromagnetischen Verträglichkeit, die insbesondere im Bereich der Luftfahrt erhebliche Bedeutung besitzen, leichter eingehalten worden können.

Die als Heizelemente ausgeführten Verbraucher sind dabei als strukturierte leitende Bereiche in Speisebehältern realisiert, die geeignet sind, elektrischen Strom aufgrund ihres ohmschen Widerstandes in Wärme umzuwandeln, und die in der Weise ausgebildet sind, dass der Gesamtfluss unter ihnen zu einer gewünschten Wärmeverteilung führt. Auf diese Weise wird dem oben geschilderten Problemen der undefinierten Erwärmung wirksam entgegengewirkt und die Ausbildung von Hot Spots oder auch "Cold Spots" wird vermieden. Da die Verbraucher nach der Lehre der Erfindung ausschließlich zur Umwandlung der seitens der Sekundärspule aufgenommenen elektrischen Energie dienen, besteht eine erhöhte Gestaltungsfreiheit bei dem Design der in diesem Fall als strukturierte leitende Bereiche ausgebildeten Verbraucher, so dass das Design im Hinblick auf die oben geschilderte gewünschte Wärmeverteilung in bestimmten Bereichen der Speisebehälter optimiert werden kann. Eine derartige gewünschte Wärmeverteilung könnte beispielsweise darin bestehen, dass im Bereich der Mitte des Bodens eines Speisebehälters eine im Vergleich zu den Randbereichen des Bodens höhere Temperatur eingestellt wird. Durch diese Temperaturverteilung wird der Tatsache Rechnung getragen, dass sich üblicherweise in Speisebehältern das größte Volumen an zu erwärmenden Speisen im mittleren Bereich des Behälters befindet. Die gewünschten Temperaturverteilungen können beispielsweise dadurch erreicht werden, dass die Dimensionen, insbesondere die Dicke oder Breite der leitenden Bereiche geeignet variiert werden.

Die Ausführung der Speisebehälter aus Porzellan hat sich in diesem Zusammenhang besonders bewährt; auf derartige Behälter können die genannten leitenden Bereiche auf einfache Weise aufglasiert werden. In einer Variante der Erfindung können die leitenden Bereiche auch dadurch aufgebracht werden, dass der Speisebehälter zunächst mit einer leitenden Schicht versehen wird, die nachfolgend mittels eines Sandstrahlverfahrens teilweise abgetragen wird. Zur Strukturierung der leitenden Bereiche hat es sich dabei als vorteilhaft erwiesen, die leitende Schicht unter Verwendung einer Maske abzutragen, mittels derer einzelne Bereiche der Schicht vor dem Sandstrahl geschützt werden. Selbstverständlich ist es als Alternative zu einer Ausführung aus Porzellan auch denkbar, die Speisebehälter mindestens teilweise aus Pappe herzustellen, wodurch sich ein Kosten- und Gewichtsvorteil ergibt. Auch auf derartige Speisebehälter können leitende Bereiche beispielsweise als strukturierte Aluminiumsschicht aufgebracht werden.

Nachfolgend werden Ausführungsbeispiele der Erfindung an Hand der Zeichnungen beschrieben.

Es zeigen:
- Fig. 1: drei Varianten zur Gestaltung der leitenden Bereiche und die korrespondierenden Temperaturverteilungen,
- Fig. 2: ein Ausführungsbeispiel, das nicht Teil der Erfindung ist, bei dem ein Verbraucher als Toaster ausgeführt ist,
- Fig. 3: ein weiteres Ausführungsbeispiel, das nicht Teil der Erfindung ist, bei dem ein Verbraucher als Dunstabzug ausgeführt ist,
- Fig. 4: ein Ersatzschaltbild der in Figur 3 gezeigten Anordnung,
- Fig. 5: die geometrischen Verhältnisse im Bereich der Rückwand eines Induktionsofens,
- Fig. 6: die Anordnung der Verbrauchereinheit 7 in einem Induktionsofen,
- Fig. 7: eine weitere Ausführungsform, die nicht Teil der Erfindung ist,
- Fig. 8: ein Ersatzschaltbild zu der in Fig. 7 dargestellten Anordnung; und
- Fig. 9: ein weiteres Ersatzschalbild einer Anordnung, die nicht Teil der Erfindung ist.

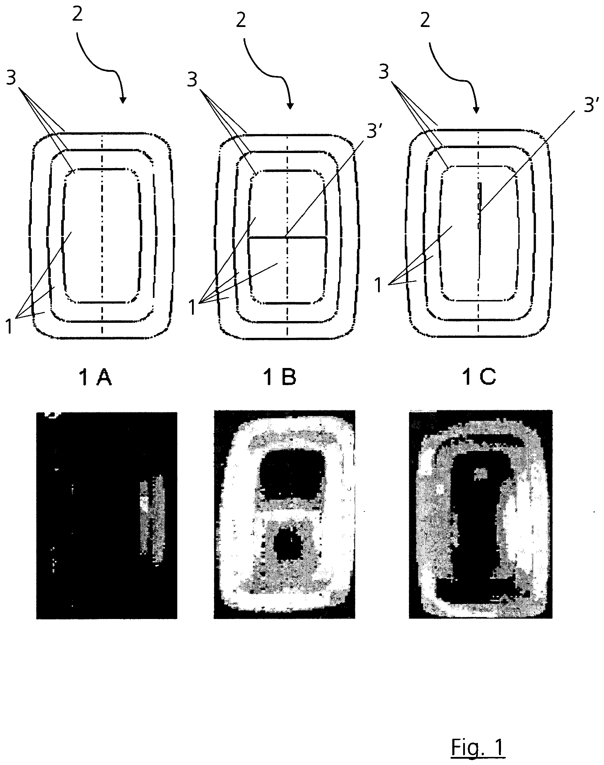

Figur 1 zeigt in den oberen Teilen der Teilfiguren 1a-1c verschiedene Varianten zur Gestaltung der als leitende Bereiche 1 ausgestalteten Verbraucher in einer Draufsicht auf den Boden eines Speisebehälters 2. Die leitenden Bereiche 1 ergeben sich in dem gezeigten Beispiel dadurch, dass isolierende Bereiche 3 aus einem insgesamt leitenden Bereich ausgenommen sind. In den unteren Teilen der Teilfiguren 1a-1c sind die korrespondierenden Temperaturverteilungen als Wärmebilder dargestellt. Gut erkennbar in Figur 1a ist dabei, dass eine ringförmige Ausgestaltung der isolierenden Bereiche 3 im Randbereich des Boden des Speisebehälters 2 zu einer vergleichsweise starken Erwärmung der Randbereiche des Bodens des Speisebehälters 2 führt, während der zentrale Bereich vergleichsweise kühl verbleibt. Die Sekundärspule wird in diesem Fall durch die zusammenhängenden leitenden Bereiche 1 gebildet. Die Gestaltung der leitenden Bereiche 1 eröffnet dabei insbesondere die Möglichkeit, lokale Inhomogenitäten in dem durch die Primärspule erzeugten elektromagnetischen Feld auszugleichen bzw. die Erwärmung definiert zu verändern.

Eine Erwärmung des zentralen Bereiches des Bodens des Speisebehälters 2 kann durch die in der Teilfigur 1b gezeigte Maßnahme erreicht werden: In diesem Fall ist ein weiterer isolierender Bereich 3' im zentralen Bereich angeordnet. Der Einfluss der Ausrichtung des weiteren isolierenden Bereiches 3' ist aus der Teilfigur 1c erkennbar.

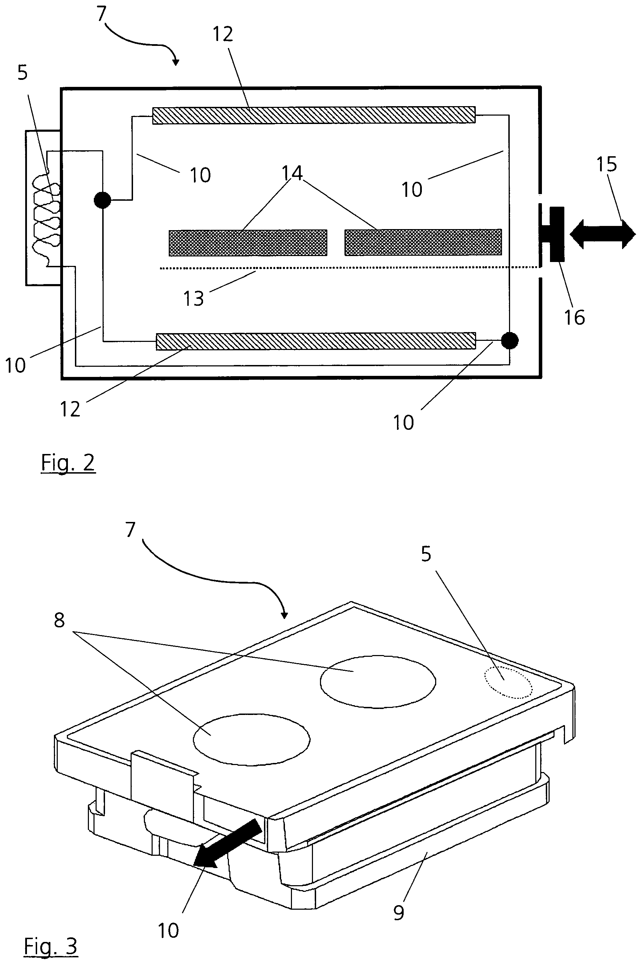

Figur 2 zeigt in einer Schnittdarstellung eine weitere Ausführungsform der Erfindung, bei der der Verbraucher als Toaster ausgebildet ist. Dabei sind im Inneren der Verbrauchereinheit 7 die Sekundärspule 5 sowie die mit der Sekundärspule 5 über elektrische Leiter 10 verbundenen Heizelemente 12 angeordnet. Im Bereich zwischen den flächig ausgebildeten Heizelementen 12 ist das Gitter 13 angebracht, das zur Lagerung der Toastscheiben 14 dient. Die gesamte Verbrauchereinheit 7 kann mittels des Griffs 16 in Richtung des Pfeils 15 in einen nicht dargestellten Induktionsofen eingebracht bzw. aus diesem herausgezogen werden. Da die Funktionalität des Toasters lediglich darin besteht, in den als Ohmsche Widerstände wirkenden Heizelementen 12 aufgrund des in die Sekundärspule 5 induzierten Stroms elektrische Verlustleistung in Form von Wärme bereitzustellen, kann bei der Realisation des erfindungsgemäßen Toasters darauf verzichtet werden, komplexe passive bzw. aktive elektronische Bauelemente im Inneren der Verbrauchereinheit 7 vorzusehen. Dies führt im Ergebnis zu einer ausgesprochen einfachen Möglichkeit, den erfindungsgemäßen Toaster zu realisieren. Figur 2 zeigt die Komponenten außerhalb eines nicht dargestellten Induktionsofens; selbstverständlich sind diese im Normalbetrieb im Inneren eines Induktionsofens angeordnet.

Figur 3 stellt eine Variante der Erfindung dar, bei der mittels der Verbrauchereinheit 7 ein Dunstabzug mit den Lüftern 8 realisiert ist. In der Figur ist die Anordnung der Verbrauchereinheit 7 in Bezug auf eine unterhalb der Verbraucherreinheit 7 angeordnete Einschubeinheit 9 dargestellt; dabei ist die Einschubeinheit 9 beispielsweise so ausgestaltet, dass sie Speisebehälter mit zu erwärmenden Speisen aufnehmen kann. Zur Verbesserung der Übersichtlichkeit der Figur ist der Induktionsofen, der im Betrieb die Verbrauchereinheit 7 und die Einschubeinheit 9 aufnimmt, weggelassen; durch den Pfeil 10 ist die Richtung angedeutet, in der die Verbrauchereinheit 7 und auch die Einschubeinheit 9 aus dem nicht dargestellten Induktionsofen entnommen werden kann bzw. in die der durch den Dunstabzug abgeführte Dampf entweicht. Im hinteren Bereich der Verbrauchereinheit 7 ist die Sekundärspule 5 angeordnet, die mit den Lüftern 8 in elektrischer Verbindung steht und elektrische Energie aus einem durch eine nicht dargestellte Primärspule erzeugten elektromagnetischen Wechselfeld aufnimmt.

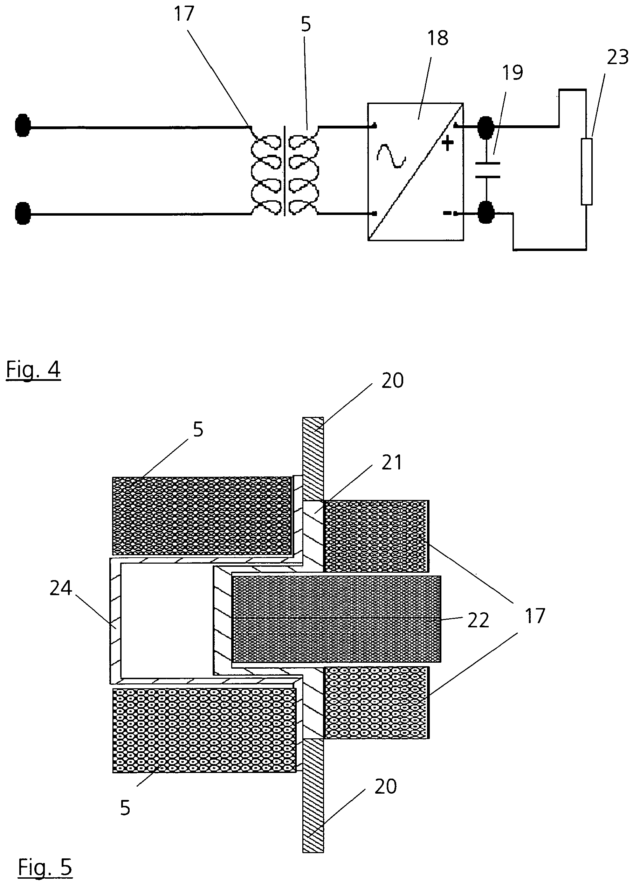

In Figur 4 ist die in Figur 3 gezeigte Anordnung anhand eines Ersatzschaltbildes dargestellt. An der Primärspule 17 liegt die volle Mittenfrequenzspannung als Wechselspannung mit U_{MF effektiv} = 130 - 320 Volt und einer Frequenz F von ca. 35 - 60 kHz an. Die in der Sekundärspule 5 induzierte Wechselspannung wird im Gleichrichter 18 in eine Gleichspannung umgewandelt und mittels des Kondensators 19 geglättet. Dabei kann der Kondensator 19 eine Kapazität von ca. 100 µF aufweisen. Die im Fall der Figur 3 als Lüfter 8 ausgebildeten Verbraucher werden in Figur 4 als Ersatzwiderstand 23, beispielsweise mit einem Widerstandswert R von ca. 9 Ohm, symbolisiert. In Verbindung mit einer Ausgangsspannung von ca. 12 Volt am Gleichrichter ergibt sich ein Strom von ca. 1,33 A.

In Figur 5 sind die geometrischen Verhältnisse im Bereich der Rückwand des in Figur 5 nicht dargestellten Induktionsofens verdeutlicht. In der Garraumrückwand 20 ist in dem Gehäuse 21 die Primärspule 17 angeordnet. Im Inneren der Primärspule 17 befindet sich der Ferrit 22, der sich über eine Ausbuchtung im Gehäuse 21 über eine Einbuchtung in der Rückseite 24 der nicht dargestellten Verbrauchereinheit bis in den Innenbereich der Sekundärspule 5 erstreckt und auf diese Weise für eine hohe Durchdringung des Bereiches der Sekundärspule 5 mit magnetischem Fluss sorgt. Der Ferrit 22 kann dabei Abmessungen von ca. 8 x 22 x 10 mm zeigen; die Primärspule 17 kann insbesondere aus acht Drähten mit jeweils ca. 0,1 mm Drahtdurchmesser in jeweils 250 Windungen realisiert sein. Auf diese Weise ergibt sich ein Erwartungswert für R_{CU} von ca. 2,7 bis 4 Ohm und für die Induktivität L von ca. 2,3 mH. Für die Sekundärspule 5 können sechs Drähte mit jeweils 0,2 mm Durchmesser und einer jeweiligen Gesamtlänge von ca. 180 cm verwendet werden. Auf diese Weise ergeben sich ca. zwanzig Windungen bei einem mittleren Durchmesser von ca. 38 mm und damit eine Induktivität von ca. 12 µH.

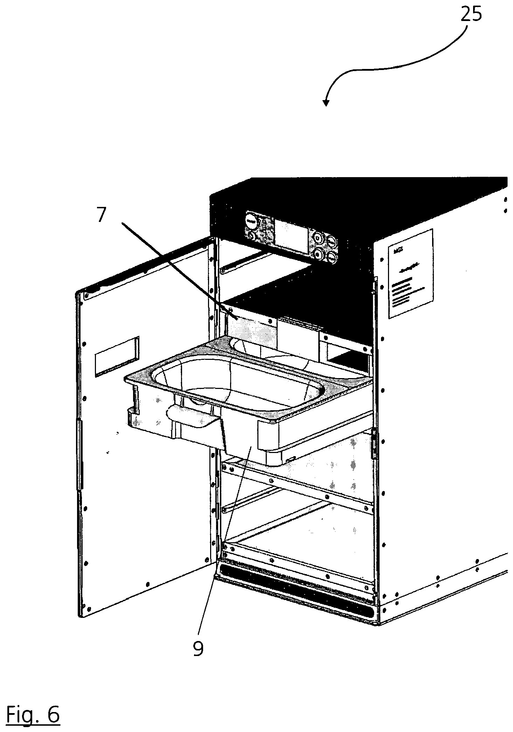

In Figur 6 ist die Anordnung der Verbrauchereinheit 7 in einem Induktionsofen 25 dargestellt. Die Figur zeigt die oberhalb einer Einschubeinheit 9 angeordnete Verbrauchereinheit 7 bei geöffneter Tür des Induktionsofens 25.

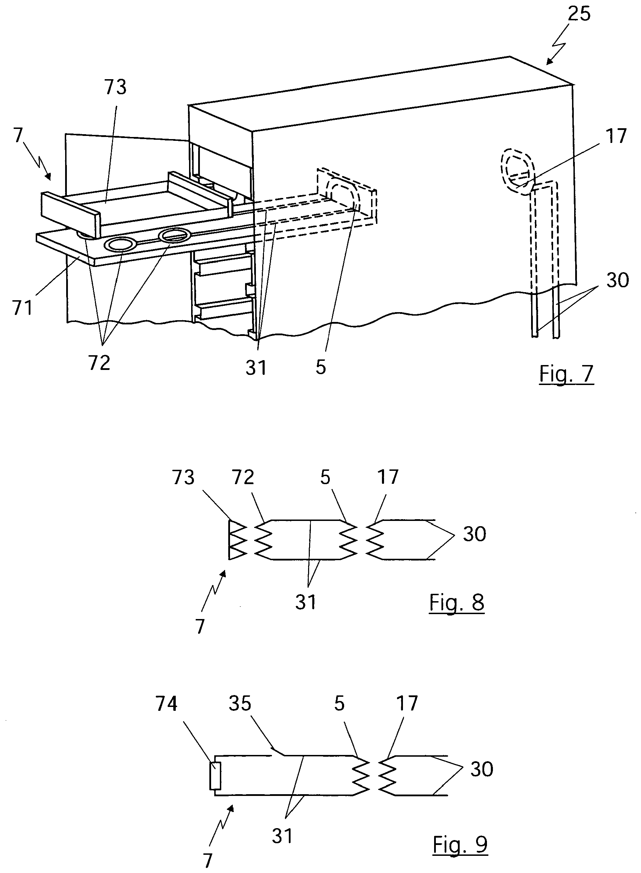

Figur 7 zeigt eine weitere Variante der Erfindung, anhand derer die Design-Flexibilität, die durch die Erfindung erreicht werden kann, demonstriert wird. In Figur 7 ist eine in dem Induktionsofen 25 angeordnete Verbrauchereinheit 7 dargestellt, die aus der Ofenschublade mit dem ersten Verbraucher 72 und dem zweiten Verbraucher 73 besteht. Die Ofenschublade 71 zeigt dabei die Induktionsspule 5, die über die Leitungen 31 mit den ebenfalls als Induktionsspulen ausgebildeten ersten Verbrauchern 72 verbunden sind. Der zweite Verbraucher 73 ist vereinfacht und schematisch als Aluminiumschale zur Erwärmung von Speisen dargestellt. Dabei ist in dem Induktionsofen 25 die Primärspule 17 im Bereich der Rückwand des Induktionsofens 25 angeordnet; sie wird über die Zuleitungen 30 von einem nicht dargestellten MF-Generator des Induktionsofens 25 mit einer elektrischen Wechselspannung beaufschlagt. Das hierdurch entstehende elektromagnetische Wechselfeld koppelt bei eingeschobener Verbrauchereinheit 7 an die Sekundärspule 5 an, die im rückwärtigen Teil der Verbrauchereinheit 7 angeordnet ist. Die hierdurch induzierte elektrische Wechselspannung wird über die Leitungen 31 in der Ofenschublade 71 zu den Induktionsspulen 72 übertragen. Das durch die Induktionsspulen 72 erzeugte elektromagnetische Wechselfeld induziert in der Aluminiumschale 73 elektrische Ströme, die aufgrund des ohmschen Widerstandes Wärme erzeugen, wodurch Speisen in den Aluminiumschalen 73 erwärmt werden können. Es handelt sich also mit anderen Worten um eine serielle Anordnung zweier Verbraucher innerhalb der Verbrauchereinheit 7. Aufgrund der in Figur 7 dargestellten besonderen Anordnung werden die beiden Verbraucher 72 und 73 kontaktlos, induktiv und damit galvanisch getrennt mit Energie versorgt. Hierdurch wird die konstruktive Umsetzung einer kontakt- bzw. kabellosen Ofenschublade 71 bzw. Verbrauchereinheit 7 ermöglicht, welche die Bedienbarkeit des erfindungsgemäßen Induktionsofens 25 weiter entscheidend verbessert. Die Primärspule 17, die Sekundärspule 5 sowie die ersten Verbraucher 72 können dabei insbesondere als Kupferspulen ausgebildet sein.

Anhand Figur 8 ist die erfindungsgemäße Anordnung in der Art eines Ersatzschaltbildes zur Illustration noch einmal verdeutlicht. Dabei beschränkt sich die Darstellung in Figur 8 auf die Verbrauchereinheit 7 und die im rechten Teil der Figur dargestellte Primärspule 17 mit den Zuleitungen 30. Deutlich erkennbar wird aus Figur 8, dass es sich bei der Anordnung aus Sekundärspule 5, Leitungen 31 und ersten Verbrauchern 72 um eine vorteilhafte Möglichkeit handelt, beispielsweise ein elektromagnetisches Wechselfeld an eine Stelle in der Verbrauchereinheit 7 zu transferieren, an der dies - abhängig von der jeweiligen Anforderung - erforderlich ist. Das grundsätzliche Prinzip der Erfindung ist dabei im vorliegenden Beispiel in der Weise umgesetzt, dass sich der Verbraucher in zwei Teilverbraucher, nämlich die Induktionsspulen 72 und die Aluminiumschale 73 unterteilt.

Figur 9 zeigt ebenfalls in der Art eines Ersatzschaltbildes eine weitere Variante der Erfindung, die eine ausgesprochen einfache Temperaturregelung ermöglicht. In der in Figur 9 dargestellten Verbrauchereinheit 7 ist der Verbraucher 74, der beliebig gestaltet sein kann, über die Zuleitungen 31 mit der Sekundärspule 5 der Verbrauchereinheit 7 verbunden. In die Sekundärspule 5 wird in der bereits beschriebenen Weise über das elektromagnetische Wechselfeld der Primärspule 17 eine elektrische Wechselspannung induziert. Die definierten Zuleitungen 31, über die der Verbraucher 74, der beispielsweise als Heizelement gestaltet sein kann, mit Spannung versorgt wird, ermöglichen es, den Thermostaten 35 in die Zuleitungen 31 einzubringen. Bei einer bestimmten, voreinstellbaren Solltemperatur, die durchaus steuerbar ausgelegt sein kann, wird dann die elektrische Verbindung zwischen der Sekundärspule 5 und dem Verbraucher 74 von dem Thermostaten 35 getrennt. Hierdurch wird gegenüber der konventionellen Lösung, bei der keine räumlich definierte Stromversorgung der Heizelemente vorgesehen ist, sondern bei der die Heizelemente als metallische Schichten ausgebildet sind, in denen räumlich undefinierte Ströme induziert werden, der besondere Vorteil erzielt, dass sich in der Verbrauchereinheit 7 selbst eine einfache Temperaturregelung realisieren lässt.

## Patentansprüche

1. Verbrauchereinheit (7) zur Wandlung induktiv übertragener elektrischer Energie mit mindestens einer Sekundärspule (5) zur Aufnahme von Energie aus einem elektromagnetischen Wechselfeld, wobei die Sekundärspule (5) elektrisch mit mindestens einem Verbraucher verbunden ist, in dem die elektrische Energie umgewandelt wird, wobei die Verbrauchereinheit (7) als austauschbares Modul für das Innere eines Induktionsofens (25) ausgebildet ist, und wobei die Verbrauchereinheit (7) einen Speisebehälter (2) aufweist,
**dadurch gekennzeichnet, dass** es sich bei dem mindestens einen Verbraucher um einen strukturierten elektrisch leitenden Bereich (1) in dem Speisebehälter (2) handelt, der geeignet ist, elektrischen Strom aufgrund seines ohmschen Widerstandes in Wärme umzuwandeln.

2. Verbrauchereinheit (7) nach Anspruch 1,
**dadurch gekennzeichnet, dass** der strukturierte elektrisch leitende Bereich (1) so dimensioniert ist, dass der magnetische Gesamtfluss unter ihm zu einer gewünschten Wärmeverteilung führt.

3. Verbrauchereinheit (7) nach einem der Ansprüche 1 oder 2,
**dadurch gekennzeichnet, dass** der Speisebehälter (2) mindestens teilweise aus Porzellan besteht.

4. Verbrauchereinheit (7) nach Anspruch 3,
**dadurch gekennzeichnet, dass** der leitende Bereich (1) auf dem Speisebehälter (2) aufglasiert ist.

5. Verbrauchereinheit (7) nach einem der Ansprüche 1 oder 2,
**dadurch gekennzeichnet, dass** der Speisebehälter (2) mindestens teilweise aus Pappe besteht.

6. Induktionsofen mit einer Verbrauchereinheit (7) nach einem der Ansprüche 1 bis 5.

## Claims

1. Consumer unit (7) for converting inductively transmitted electrical energy, having at least one secondary coil (5) for receiving energy from an electromagnetic alternating field, the secondary coil (5) being electrically connected to at least one consumer in which the electrical energy is converted, the consumer unit (7) being designed as an exchangeable module for the interior of an induction furnace (25), and the consumer unit (7) comprising a food container (2),
**characterized in that** the at least one consumer is a structured electrically conductive region (1) in the food container (2), which is suitable for converting electric current into heat due to its ohmic resistance.

2. Consumer unit (7) according to claim 1,
**characterized in that** the structured electrically conductive region (1) is dimensioned such that the total magnetic flux below it leads to a desired heat distribution.

3. Consumer unit (7) according to one of the claims 1 or 2,
**characterized in that** the food container (2) is at least partially made of porcelain.

4. Consumer unit (7) according to claim 3,
**characterized in that** the conductive region (1) is glazed onto the food container (2).

5. Consumer unit (7) according to one of the claims 1 or 2,
**characterized in that** the food container (2) is at least partially made of cardboard.

6. Induction furnace with a consumer unit (7) according to one of claims 1 to 5.

## Revendications

1. Unité consommatrice (7) pour la conversion d'énergie électrique transmise par induction, avec au moins une bobine secondaire (5) destinée à recevoir de l'énergie d'un champ alternatif électromagnétique, la bobine secondaire (5) étant reliée électriquement à au moins un consommateur dans lequel l'énergie électrique est convertie, l'unité consommatrice (7) étant conçue comme un module interchangeable pour l'intérieur d'un four à induction (25) et l'unité consommatrice (7) présentant un récipient pour aliments (2),
**caractérisée en ce que** ledit au moins un consommateur est une zone électriquement conductrice structurée (1) dans le récipient pour aliments (2), qui est conçue pour convertir un courant électrique en chaleur en raison de sa résistance ohmique.

2. Unité consommatrice (7) selon la revendication 1,
**caractérisée en ce que** la zone électriquement conductrice structurée (1) est dimensionnée de telle sorte que le flux magnétique total en dessous d'elle conduit à une répartition de chaleur souhaitée.

3. Unité consommatrice (7) selon l'une des revendications 1 ou 2,
**caractérisée en ce que** le récipient pour aliments (2) est au moins partiellement en porcelaine.

4. Unité consommatrice (7) selon la revendication 3,
**caractérisée en ce que** la zone conductrice (1) est appliquée par glaçage sur le récipient pour aliments (2).

5. Unité consommatrice (7) selon l'une des revendications 1 ou 2,
**caractérisée en ce que** le récipient pour aliments (2) est au moins partiellement en carton.

6. Four à induction avec une unité consommatrice (7) selon l'une des revendications 1 à 5.
